# EUROPEAN PATENT APPLICATION

(11) **EP 4 764 073 A1**
(43) Date of publication of application: **24.06.2026**
(21) Application number: 25225207.7
(22) Date of filing: 18.12.2025
(51) Int. Cl.: E01C 13/08, C08J 7/04

(54) **ARTIFICIAL TURF SYSTEM WITH BIODEGRADABLE AND/OR ANTIMICROBIAL COATED FILLER PARTICLES**

(30) Priority: 23.12.2024 US 202463738081 P
(71) Applicant: USGreentech, L.L.C., Cincinnati, OH 45244 (US)
(72) Inventor: Vocke, Ross C., Cincinnati, OH 45244 (US); Borgman, Bradley T., Cincinnati, OH 45244 (US); Coleman, Adam C., Cincinnati, OH 45244 (US); Cobb, Michael G., Cincinnati, OH 45244 (US)
(74) Representative: Beyer, Andreas

(57) **Abstract**

Artificial turf systems including biodegradable filler particles are disclosed. Filler particles can include a coating that facilitates biodegradability. The coating can include one or more polymer compounds, such as polyhydroxyalkanoates. The coating can further include an antimicrobial agent and a colorant.

## Description

### REFERENCE TO RELATED APPLICATIONS

The present application claims the priority of U.S. provisional application Serial No. 63/738,081, entitled BIODEGRADABLE FILLER FOR ARTIFICIAL TURF SYSTEM, filed December 23, 2024.

### TECHNICAL FIELD

The present disclosure generally relates to artificial turf systems including biodegradable filler particles.

### BACKGROUND

Artificial turf systems are known to include a layer of pile and filler particles that are spread evenly over the pile to cover a backing fabric. Conventional filler particles, which can include sand, often include a coating that imparts a variety of properties to the filler particles. For example, coated filler particles have been provided to increase resiliency, decrease packing, and enhance drainage. There remains a need, however, for these filler particles used in artificial turf systems to be biodegradable and maintain desired performance standards.

### SUMMARY

The invention provides an artificial turf system according to the independent claims 1 and 14. Embodiments of the invention are disclosed in dependent claims and the following description. Features of dependent claims 2 to 13 could be singly of in any combination combined with the turf system of claim 14. According to one embodiment, an artificial turf system includes a surface layer having a pile fabric, the pile fabric including pile tufts secured to a backing fabric, wherein coated filler particles are spread over the pile fabric; wherein the coated filler particles comprise a plurality of filler particles coated with a coating comprising one or more polymers; and wherein the coated filler particles are at least partially biodegradable in accordance with OECD 301B CO₂ evolution testing.

According to another embodiment, an artificial turf system includes a surface layer having a pile fabric, the pile fabric including pile tufts secured to a backing fabric, wherein coated filler particles are spread over the pile fabric; wherein the coated filler particles comprise a plurality of filler particles coated with a coating comprising one or more polymers and an antimicrobial agent; wherein the coated filler particles meet the requirements of one or more of American Association of Textile Chemists and Colorists (AATCC) standard TM90 (2016), AATCC standard TM211 (2021), and ASTM standard G21 (2015).

### BRIEF DESCRIPTION OF THE DRAWINGS

The construction designed to carry out the invention will hereinafter be described, together with other features thereof.

The invention will be more readily understood from a reading of the following specification and by reference to the accompanying drawings forming a part thereof, wherein an example of the invention is shown and wherein:
FIG. 1 is a perspective view of a sports field employing an artificial turf system;
FIG. 2 is a partial exploded cutaway side view of filler particles in use within an outer layer of the artificial turf system of FIG. 1 according to one embodiment;
FIG. 3 is a fully exploded cutaway side view of the filler particles in use within the artificial turf system of FIG. 1 according to one embodiment;
FIG. 4 is a cutaway side view of the angle of repose of filler particles;
FIG. 5 is an exploded view of coated filler particles; and
FIG. 6 is a top sectional view of filler particles surrounding and supporting pile tufts.

### DETAILED DESCRIPTION

The invention is now further disclosed and explained with reference to Figures. It is to be understood that features shown in Figures can be singly employed in the present invention, or employed in any sub-combination, within the scope of the appended independent claims. In other words, the invention, when explained with reference to the Figures, is not necessarily limited to the combination(s) of features as shown in the Figures, even if the combination of all shown features can be employed. When the Figures show combinations of features, this is for the purpose of explaining the invention in a concise manner.

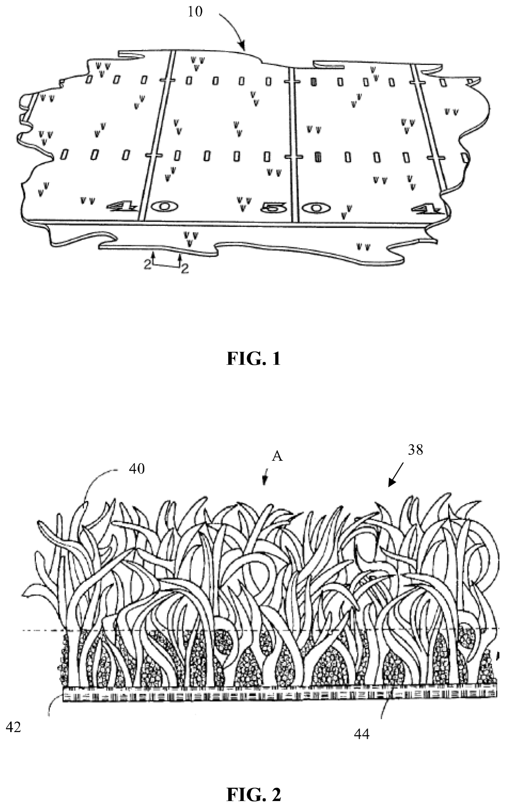

Artificial turf systems can be usable for many different purposes such as sports surfaces, landscaping, commercial green spaces and the like. The sports surface 10 illustrated in FIG. 1 is an American football field. The arrangement of such artificial turf systems can be equally adaptable for playgrounds, putting greens and landscaping. Functional artificial turf systems for such purposes can be of proper firmness, be durable, and allow for proper drainage and easy installation. In embodiments, for sport and landscape, artificial turf systems can have proper abrasiveness, traction, flame retardance, and not present bacterial or fungicidal problems. It is also important that facilities employing such artificial turf systems maintain an even surface and not pack or mound unnecessarily. In embodiments, artificial turf systems can provide consistent performance across a surface thereof and include a hygienic surface that exhibits antimicrobial properties.

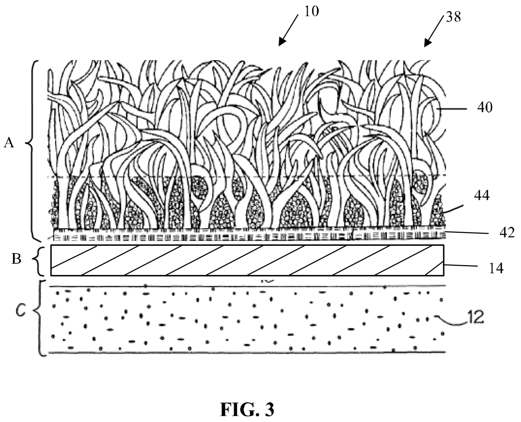

Turning now to FIGS. 2 and 3, an artificial turf system of the invention is shown broken into three components, i.e., a surface layer A, an underlayment layer B, and a base layer C.

As shown, for example, in FIG. 3, the base layer C can include a support base 12. In embodiments, the base 12 can include one or more of gravel, crushed stone, crushed stone and sand, asphalt, and concrete. In embodiments, the base 12 can be placed over a geotextile fabric layer (not shown in the FIGS.). In embodiments, the base 12 can be placed over an impermeable layer (not shown in the FIGS.).

The underlayment layer B can include one or more pads 14, which can be placed over the base layer C. A variety of pad types can be suitable for use with the artificial turf systems. In embodiments, the pad can be formed from a shock-absorbing material. Such pads can provide a balance between resiliency and cushioning for consistent performance across the surface of the artificial turf system. It will be appreciated that artificial turf systems can additionally or alternatively include a support layer as described in U.S. Patent No. 9,845,577.

The surface layer A can include pile fabric 38, which can include pile tufts 40 secured to a backing fabric 42. The backing fabric 42 can be supported by the pad layer B, for example, on a transition layer.

Pile tufts 40 can be formed from a variety of materials, including one or more of polyethylene, polypropylene, and nylon. Tuft-forming synthetic filaments can have a ribbon-like cross-section of between about 1/32 inch to about 3/8 inch in width. The pile tufts 40 can have a height between about 1/4 inch to about 4 inches, and pile tufts 40 within a pile fabric 38 can vary in height or be of uniform height. The pile tufts 40 can be secured to the backing fabric 42 by any of tufting, weaving, braiding or bonding, as desired.

In embodiments, the backing fabric can be a porous textile fabric 42. The porous textile backing fabric 42 can be positioned over pad 14. Alternatively, in other embodiments, porous textile fabric 42 can be positioned directly over base layer C.

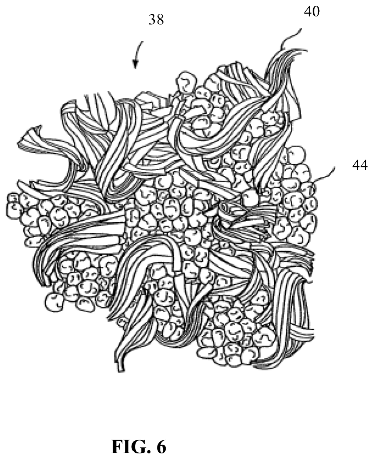

Filler particles 44 can be spread evenly over the pile fabric 38, as shown in FIG. 6, to cover a surface of the backing fabric 42 to surround and cover desired portions of the pile tufts 40. The filler particles 44 can be applied to a depth of about 0.25 inch to about 2.00 inches. The filler particles can be formed from a variety of different materials, including, for example, silica sand particles (SiO₂). In embodiments, the filler particles can be coated. Filler particles may be evenly-sized or of varying sizes. In embodiments, similarly-sized particles can be utilized to promote greater porosity to promote desired drainage, and proper firmness and resiliency.

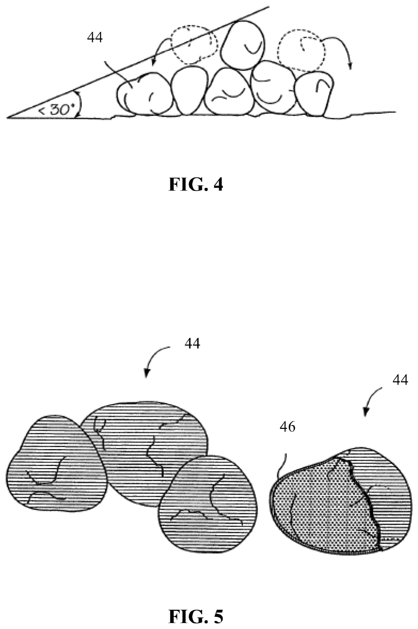

In embodiments, filler particles 44 (e.g., sand) can include a coating 46 on an outer surface thereof, as shown in FIG. 5. The coating 46 can sufficiently adhere to silicon dioxide filler particles 44 (e.g., sand) to form coated filler particles. These coatings can exhibit desirable durability, and in embodiments, can demonstrate sufficient durability when subjected to Micro-Deval testing in accordance with American Society of Testing and Materials (ASTM) standard D6928. In embodiments, the coating 46 can provide the filler particle 44 with a non-porous outer surface. Application of coatings to the filler particles can result in the coated filler particles being rounded with no sharp edges, but it will be appreciated that suitable coated filler particles can be provided in any of a variety of shapes and configurations. In embodiments, the coatings described herein can comprise less than 1%, by weight, of a coated filler particle. For example, the coating can comprise about 0.9% or less; about 0.8% or less; about 0.7% or less; about 0.65% or less; about 0.6% or less; about 0.55% or less; or about 0.5% or less, by weight of the coated filler particle. In embodiments, the coating can comprise about 0.6%, by weight, of the coated particle.

In embodiments, the filler particles can be sized and cleaned, prior to coating, to be between about 8 mesh and about 60 mesh and are substantially dust free. In embodiments, the particles can be sized to be between about 12 mesh and about 40 mesh; in embodiments, the particles can be sized to be between about 12 mesh and about 30 mesh; in embodiments, the particles can be sized to be between about 12 mesh and about 20 mesh; in embodiments, the particles can be sized to be between about 16 mesh and about 30 mesh; in embodiments, the particles can be sized to be between about 20 mesh and about 40 mesh; and in embodiments, the particles can be sized to be between about 30 mesh and about 50 mesh. The silicon dioxide filler particles (e.g., sand) can be sized to be within no more than five mesh sizes. In embodiments in which the silicon dioxide filler particles (e.g., sand) can be appropriately sized and exhibit sufficient roundness, piling and mounding among the filler particles can be reduced or eliminated. In such embodiments, the silicon dioxide filler particles (e.g., sand) can maintain an angle of repose of about 30° as shown in FIG. 4. Such features, while maintaining an even surface, can assist in providing even porosity and a consistent G-max factor.

In embodiments, the filler particles can exhibit biodegradability. In such embodiments, the coating can be formulated to facilitate such biodegradability. For example, these coatings can be formed from materials including one or more polymer compounds, where the one or more polymer compounds can include bio-based (or bio-sourced) and/or synthetic monomers. The terms "bio-based" and "bio-sourced," as used herein, refers to ingredients derived from biological sources and not from petroleum-based products. Bio-based or bio-sourced monomer content refers to the percentage, by weight, of the residue of the monomers in the polyesters derived from biologically-based raw materials and not from petroleum-based sources. Bio-based or bio-sourced monomers useful with the compositions described herein can include monomers containing bio-based or bio-sourced carbon. The terms "bio-based carbon" and "bio-sourced carbon" refers to carbon obtained from a biological source rather than a fossil-based source. The bio-based or bio-sourced content of a monomer, a copolymer, or a copolymer composition can be determined using a method such as ASTM D6866-08. ASTM D6866-08 provides three different methods for determining the bio-based or bio-sourced content of a solid, liquid, or gaseous composition. For example, the compositions described herein can be dried as a film and tested as a solid. As defined by ASTM D6866-08, bio-based or bio-sourced content is the amount of bio-based or bio-sourced carbon in the material or product as a percent of the weight (mass) of the total organic carbon in the product. In particular, ASTM D6866-08 Method B measures the ratios of 14C/12C and 13C/12C in the composition using Accelerator Mass Spectrometry (AMS) and Isotope Ratio Mass Spectrometry (IRMS). Fossil-based carbon contains essentially no 14C because its age is much greater than the 5,730 year half-life of 14C. The presence and level of 14C in a composition provides a direct measure of the amount of carbon that originated from a source other than a fossil fuel, i.e., the level of bio-based or bio-sourced carbon in the composition. Carbon based on biological sources is referred to as modern carbon.

In embodiments, a coating can be formed from polymer compounds including about 15% or less, by weight, synthetic monomers; in embodiments, a coating can be formed from polymer compounds including about 10% or less, by weight, synthetic monomers; and in embodiments, a coating can be formed from polymer compounds including about 5% or less, by weight, synthetic monomers. In embodiments, a coating can be formed from polymer compounds including about 85% or more, by weight, bio-sourced monomers; in embodiments, a coating can be formed from polymer compounds including about 90% or more, by weight, bio-sourced monomers; and in embodiments, a coating can be formed from polymer compounds including about 95% or more, by weight, bio-sourced monomers. In one embodiment, a coating can be formed from polymer compounds including about 10%, by weight, synthetic monomers and about 90%, by weight, bio-sourced (or bio-based) monomers. In embodiments, the polymer compound can include polyhydroxyalkanoates (PHAs). In other embodiments, the coating can include one or more of polyvinylpyrrolidones (PVPs), polyvinyl alcohol (PVA), cellulosics, guar-based products, and corn derivatives. Coatings suitable for use with the filler particles are described in International Patent Publication WO2025/235729 and International Patent Publication WO2025/235759.

It will be appreciated that, in embodiments, the coatings can be formed from materials that meet the requirements of OECD 301B CO₂ evolution testing (and in compliance with ISO/IEC 17025 (2017)) to be considered readily biodegradable. That is, the coatings can allow for 60% degradation or more in accordance with OECD 301B testing. In other embodiments, the coatings can be considered partially biodegradable in accordance with OECD 301B CO₂ evolution testing. In embodiments, the coatings can allow for 55% degradation or more in accordance with OECD 301B testing; in embodiments, the coatings can allow for 50% degradation or more in accordance with OECD 301B testing; in embodiments, the coatings can allow for 45% degradation or more in accordance with OECD 301B testing; in embodiments, the coatings can allow for 40% degradation or more in accordance with OECD 301B testing; in embodiments, the coatings can allow for 35% degradation or more in accordance with OECD 301B testing; in embodiments, the coatings can allow for 30% degradation or more in accordance with OECD 301B testing; in embodiments, the coatings can allow for 25% degradation or more in accordance with OECD 301B testing; in embodiments, the coatings can allow for 20% degradation or more in accordance with OECD 301B testing; in embodiments, the coatings can allow for 15% degradation or more in accordance with OECD 301B testing; and in embodiments, the coatings can allow for 10% degradation or more in accordance with OECD 301B testing. In embodiments, it may be desirable to modify a biodegradation rate to balance system longevity and environmental interests. For example, in such embodiments, the biodegradation rate can be reduced. It will be appreciated that, in embodiments, the coating may further be bio-based.

In embodiments, the coatings described herein can further include an antimicrobial agent. This also applies to the coating as laid down in claim 1. For example, a suitable antimicrobial agent can include MICROBAN^{®}. It will be appreciated, however, that other antimicrobial agents may be included in a coating. In embodiments, coatings including an antimicrobial agent can meet the requirements of one or more of American Association of Textile Chemists and Colorists (AATCC) standard TM90 (2016), AATCC standard TM211 (2021), and ASTM standard G21 (2015). For example, suitable coatings can pass zone of inhibition testing of TM90. Suitable coatings can exhibit a reduction of bacterial-caused odor of 99% in accordance with TM211 testing. Suitable coatings can exhibit a rating of 1 or less, i.e., less than 10% growth, or lower on the scale used for ASTM standard G21 testing. It will be appreciated that an antimicrobial agent can be effective in providing a hygienic filler particle and prolonging the life of a filler particle, even where the filler particle exhibits biodegradability. In embodiments, the antimicrobial agent can comprise about 3% or less, by weight, of the coating; in embodiments, about 2% or less, by weight, of the coating; and in embodiments, about 1% to about 2%, by weight, of the coating.

In embodiments, the coatings described herein can be formed from natural, non-chemically modified and/or bio-based materials. Such natural, non-chemically modified and/or bio-based materials can assist in facilitating the desired biodegradability of the filler particles sought for the artificial turf filler. Suitable examples of natural materials can include biopolymers, such as, for example, carbohydrates. In one embodiment, a coating can be formed from a natural carbohydrate biopolymer such as carrageenan, a natural food additive extracted from seaweed. In embodiments where coatings are formed from natural, non-chemically modified and/or bio-based materials, the coatings can be formed entirely of, or substantially entirely of, such natural, non-chemically modified and/or bio-based materials.

In embodiments, the coating can further include colorants for a desired aesthetic effect. The colorant of choice can be natural pigment. Suitable colorants for the silicon dioxide particles (e.g., sand) can include, for example, iron oxide (FeO₂) for black and chromium (III) oxide (Cr₂O₃) for green. It will be appreciated, however, that any of a variety of other natural colorants and blends thereof can be applied. In embodiments, black colorants can be used to enhance artificial turf or natural turf. In embodiments, the colorant can comprise about 2% to about 10%, by weight, of the coating; in embodiments, about 4% to about 9%, by weight, of the coating; and in embodiments, about 6% to about 8%, by weight, of the coating.

In embodiments, the coatings for the filler particles described herein can pass UV exposure tests in accordance with EN ISO 20105 (1994) testing, which determines an amount of color change after accelerated UV exposure. For example, in such testing, suitable coatings will exhibit a three, i.e., moderate level of color change, or higher on the gray scale index.

In embodiments, other additives can be included to form the coating. For example, additives can include one or more of natural or synthetic rubber, various plastic polymers, silver ions or nitrate, various fragrances, ultraviolet stabilizers, and coolants. The additives can be used to modify any of a texture, and odor of the filler particles.

Artificial turf systems can be sufficiently stable so as to maintain a generally even outer surface. These systems can also exhibit resilience and stability so that the surface can provide consistent performance.

In embodiments, artificial turf systems can exhibit a G-max considered acceptable to industry standards. G-max, which is a measure of the resiliency or shock-absorbing capability of artificial turf.

### Examples

Testing was conducted for several example coated filler particles. The filler particles for each example were formed from silica sand particles. The particles of Comparative Example 1 included a coating formed of PVA. The particles of Comparative Example 2 included a coating formed of PVA and carrageenan. The particles of Inventive Example 1 included a coating formed of carrageenan only. The particles of Inventive Example 2 included a coating formed of 98.4%, by weight, of a polymer compound and 1.6%, by weight, of an antimicrobial agent (i.e., MICROBAN^{®}).; such that the polymer compound included 90%, by weight, of bio-sourced monomers and 10%, by weight, of synthetic monomers. The particles of Inventive Example 3 included a coating formed of a polymer compound, the polymer compound including 90%, by weight, of bio-sourced monomers and 10%, by weight, of synthetic monomers. The examples were tested for biodegradability according to OECD 301B CO₂ evolution testing.

**Table 1. OECD 301B CO₂ Evolution Testing Results for Biodegradability**

| **Example** | **Biodegradability Results at 28 Days** |
|---|---|
| Comparative Example 1 | 2.9% |
| Comparative Example 2 | 0% |
| Inventive Example 1 | 15.5% |
| Inventive Example 2 | 12.8% |
| Inventive Example 3 | 23.2% |

As shown in Table 1, above, Inventive Example 2, which included an antimicrobial agent, exhibited lower biodegradability results than Inventive Example 3, which included the same formulation but without an antimicrobial agent. Each of Inventive Examples 1-3, however, exhibited a biodegradability higher than each of Comparative Examples 1 and 2.

While preferred embodiments of the invention have been described using specific terms, such description is for illustrative purposes only, and it is to be understood that changes and variations may be made without departing from the spirit or scope of the following claims.

The dimensions and values disclosed herein are not to be understood as being strictly limited to the exact numerical values recited. Instead, unless otherwise specified, each such dimension is intended to mean both the recited value and a functionally equivalent range surrounding that value.

It should be understood that every maximum numerical limitation given throughout this specification includes every lower numerical limitation, as if such lower numerical limitations were expressly written herein. Every minimum numerical limitation given throughout this specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Every document cited herein, including any non-patent literature, cross-referenced or related patents or applications, are hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests, or discloses any such invention. Further, to the extent that any meaning or definition of a term in this document conflicts with any meaning or definition of the same term in a document incorporated by reference, the meaning or definition assigned to that term in the document shall govern.

The foregoing description of embodiments and examples has been presented for purposes of description. It is not intended to be exhaustive or limiting to the forms described. Numerous modifications are possible in light of the above teachings. Some of those modifications have been discussed and others will be understood by those skilled in the art. The embodiments were chosen and described for illustration of various embodiments. The scope is, of course, not limited to the examples or embodiments set forth herein, but can be employed in any number of applications and equivalent articles by those of ordinary skill in the art. Rather it is hereby intended the scope be defined by the claims appended hereto.

It should be understood that certain aspects, features, structures, or characteristics of the various embodiments can be interchanged in whole or in part. Reference to embodiments mean that a particular aspect, feature, structure, or characteristic described in connection with embodiments can be included in at least one embodiment and may be interchanged with other embodiments. The appearances of the phrase "in embodiments" in various places in specification are not necessarily all referring to the same embodiment, nor are embodiments necessarily mutually exclusive of other embodiments. It should also be understood that the steps of the methods set forth herein are not necessarily required to be performed in the orders described, and the order of the steps of such methods should be understood to be merely exemplary. Likewise, additional steps can be included in such methods, and steps may be omitted or combined, in methods consistent with embodiments.

## Claims

1. An artificial turf system, comprising:
a surface layer having a pile fabric, the pile fabric including pile tufts secured to a backing fabric, wherein coated filler particles are spread over the pile fabric;
wherein the coated filler particles comprise a plurality of filler particles coated with a coating comprising one or more polymers; and
wherein the coated filler particles are at least partially biodegradable in accordance with OECD 301B CO₂ evolution testing.

2. The artificial turf system of claim 1, wherein the filler particles are formed from silica sand particles.

3. The artificial turf system of one or more of the preceding claims, wherein the filler particles are between about 8 mesh and about 60 mesh

4. The artificial turf system of one or more of the preceding claims, wherein an outer surface of the coated filler particles is non-porous.

5. The artificial turf system of one or more of the preceding claims, wherein the coating comprises less than about 1%, by weight, of the coated filler particle.

6. The artificial turf system of one or more of the preceding claims, wherein the coatings allow for 10% degradation or more in accordance with OECD 301B CO₂ evolution testing.

7. The artificial turf system of one or more of the preceding claims, wherein the coatings allow for 20% degradation or more in accordance with OECD 301B CO₂ evolution testing.

8. The artificial turf system of one or more of the preceding claims, wherein the one or more polymers comprise one or more of bio-based monomers and synthetic monomers.

9. The artificial turf system of one or more of the preceding claims, wherein the one or more polymers comprise:
about 90%, by weight, of bio-based monomers; and
about 10%, by weight, of synthetic monomers.

10. The artificial turf system of one or more of the preceding claims, wherein the coating comprises natural, non-chemically modified materials and/or bio-based materials.

11. The artificial turf system of one or more of the preceding claims, wherein the coating comprises carrageenan.

12. The artificial turf system of one or more of the preceding claims, further comprising:
a pad layer supporting and in contact with the surface layer; and
a base layer supporting and in contact with the pad layer.

13. The artificial turf system of one or more of the preceding claims, wherein the coated filler particles are applied at a depth of from about 0.25 inches to about 2.0 inches.

14. An artificial turf system, comprising:
a surface layer having a pile fabric, the pile fabric including pile tufts secured to a backing fabric, wherein coated filler particles are spread over the pile fabric;
wherein the coated filler particles comprise a plurality of filler particles coated with a coating comprising one or more polymers and an antimicrobial agent;
wherein the coated filler particles meet the requirements of one or more of American Association of Textile Chemists and Colorists (AATCC) standard TM90 (2016), AATCC standard TM211 (2021), and ASTM standard G21 (2015).

15. The artificial turf system of claim 14, wherein the antimicrobial agent comprises about 3% or less, by weight, of the coating; and
wherein optionally the one or more polymers comprise one or more of bio-based monomers and synthetic monomers; and
wherein optionally, and independently of the presence of one or more of bio-based monomers and synthetic monomers, the coatings allow for 10% degradation or more in accordance with OECD 301B CO₂ evolution testing.
